# EUROPÄISCHE PATENTSCHRIFT

(11) **EP 2 501 725 B1**
(45) Veröffentlichungstag und Bekanntmachung des Hinweises auf die Patenterteilung: **24.12.2014**
(21) Anmeldenummer: 10760731.9
(22) Anmeldetag: 07.10.2010
(51) Int. Cl.: C08F 2/02, C08F 220/06, C08F 220/18, C08F 220/26, C09D 133/06, C09D 133/08, C09D 133/10

(54) **SUBSTANZPOLYMERISATION VON (METH)ACRYLAT-COPOLYMEREN, DIE IM WÄSSRIG-ALKALISCHEN LÖSLICH SIND**
MASS POLYMERIZATION OF (METH)ACRYLATE CO-POLYMERS WHICH ARE SOLUBLE IN AQUEOUS ALKALINE
POLYMÉRISATION EN MASSE DE COPOLYMÈRES DE (MÉTH)ACRYLATE QUI SONT SOLUBLES DANS LES ALCALINS AQUEUX

(30) Priorität: 20.11.2009 DE 102009046922
(43) Veröffentlichungstag der Anmeldung: 26.09.2012
(73) Patentinhaber: Evonik Röhm GmbH, 64293 Darmstadt (DE)
(72) Erfinder: POPPE, Dirk, 60385 Frankfurt am Main (DE); JANAS, Wolfgang, 63826Geiselbach (DE); KLEINSTEINBERG, Frank, 46519 Alpen (DE); CHRISTOFZIK, Anja, 44805 Bochum (DE)
(86) Internationale Anmeldenummer: PCT/EP2010/064957
(87) Internationale Veröffentlichungsnummer: WO 2011/061004

(56) Entgegenhaltungen:
- EP-A2- 0 578 498
- DE-B1- 2 641 108
- US-A- 5 098 952
- US-A- 5 574 117
- US-A1- 2009 131 610
- US-B1- 6 552 144

## Beschreibung

### Gebiet der Erfindung

Die vorliegende Erfindung betrifft die Synthese von Substanzpolymerisaten auf (Meth)acrylatbasis, die im Wässrig-alkalischen löslich sind. Insbesondere betrifft die vorliegende Erfindung die Synthese von Polymeren mittels einer Substanzpolymerisation. Solche Substanzpolymerisate weisen eine deutlich bessere Löslichkeit in wässrig-alkalischen Medien auf als entsprechende Polymerisate, die mittels einer heterogenen wässrigen Polymerisationsmethode, wie Emulsions- oder Suspensionspolymerisation, hergestellt werden. Besser löslich umschreibt in diesem Zusammenhang die Tatsache, dass die Lösungsgeschwindigkeit bei Partikeln gleicher Größe schneller ist, dass nach dem Lösen keine signifikante Trübung verbleibt, und dass die Viskosität der erhaltenen Lösungen bei identischem Feststoffgehalt geringer ist. Darüber hinaus ist die Kompatibilität der erfindungsgemäßen Verbindungen zu wasserbasierten Lacken mindestens vergleichbar oder sogar verbessert.

### Stand der Technik

In EP 1 268 690 werden Bindemittel auf Acrylatbasis für wässrige Lacke beschrieben, in WO 2005/058993 Bindemittel für die Kombination aus Acrylaten und Polyurethanen. Die Herstellung der Vinylkomponente erfolgt dabei jeweils mittels Emulsionspolymerisation. Vorteil der Emulsionspolymerisation gegenüber Verfahren wie der Lösungspolymerisation oder auch der Substanzpolymerisation ist, dass eine wässrige Dispergierung direkt im Polymerisationsmedium erfolgen kann. Wenn die Verarbeitung jedoch nicht direkt in einer wässrigen Lösung bzw. Dispersion erfolgt, sondern z.B. für eine Compoundierung in einem Extruder erweist sich Wasser als Medium aufgrund der hohen Polarität und Siedetemperatur als besonders nachteilig. Ein weiterer Nachteil der Emulsionspolymerisation für Lackanwendungen ist die große Menge an Hilfs- und Prozessstoffen, die nur aufwendig aus dem Bindemittel entfernt werden können und die Lackqualität beeinflussen.

Suspensionspolymerisate dagegen können mit weniger Hilfs- und Prozessstoffen hergestellt werden. Dagegen sind Polymere mit hohen Säurezahlen, und damit einer guten Dispergierbarkeit in Wasser, nur schlecht zu realisieren. Eine große Zahl Säuregruppen stört an der Grenzfläche der Monomere zur wässrigen Phase die Tröpfchenbildung oder ein großer Anteil der säurehaltigen Monomere wird schlicht in der wässrigen Phase gelöst und steht der Polymerisation damit nicht mehr zur Verfügung. Ein Beispiel für ein solches kommerziell verfügbares Suspensionspolymerisat ist das unter der Bezeichnung Neocryl B 817 der Fa. DSM B.V. (Geleen, NL) erhältliche Acrylatbindemittel.

Diese Grenzphasen-Effekte, die sowohl bei der Emulsionsals auch der Suspensionspolymerisation auftreten, bewirken zusätzlich eine ungleichmäßige Verteilung der Säuregruppen über die Polymerketten. Die Ketten weisen somit unpolare und polare Kettensegmente auf. Dieser Kettenaufbau bringt jedoch in einer wässirgen Lösung zwei weitere Nachteile mit sich: zum einen neigen wässrige Lösungen bzw. Lacke aus solchen wässrigen Dispersion aufgrund von Phasenseparationen zur Trübung; zum anderen weisen wässrige Lösungen bzw. Dispersionen solcher segmentierter Polymere deutlich höhere Lösungsviskositäten auf als regelmäßig strukturierte analoge Polymere.

Neben der optischen Klarheit und der guten Wasserlöslichkeit bzw. -dispergierbarkeit müssen Acrylatbindemittel für moderne wässrige Lacksysteme weitere Eigenschaften aufweisen, die bis dato vom Stand der Technik nur unzureichend erfüllt werden. Im Idealfall würden die Bindemittel zu einer Vielzahl verschiedener anderer Lacksysteme eine gute Verträglichkeit aufweisen. Als Beispiele seien Polyurethane, andere Poly(meth)acrylate, Polyester oder Epoxysysteme genannt. Gleichzeitig sollten die Bindemittel jedoch auch eine gute Dispergiereigenschaften von Pigmenten aufweisen. Nur gut dispergierte Pigmente führen in einem späteren Lack zu einer hohen Farbtiefe und Gleichmäßigkeit und damit zu einer gewünschten Lackqualität. Darüber hinaus sollten die Poly(meth)acrylate in Kombination mit anderen Lackbindemittel positiv zu diesen Eigenschaften beitragen. Poly(meth)acrylate nach Stand der Technik weisen jedoch die Kombination aus diesen gewünschten Eigenschaften nicht auf.

Die kontinuierlich betriebene Substanzpolymerisation zur Herstellung von säurefunktionellen Poly(meth)acrylaten ist prinzipiell vorbeschrieben.

In EP 0 143 935 sind Copolymere aus Ethylacrylat und Methacrylsäure beschrieben, die mindestens 17 Gew% Methacrylsäure enthalten und zur Herstellung von Schutzfolien verwendet werden, die durch Behandlung mit alkalischen Lösungen aufgelöst werden können. Die Herstellung der Polymere erfolgt mit einem Zweischneckenextruder. Für Lackanwendungen sind diese Polymere aus zwei verschiedenen Bausteinen jedoch nicht geeignet. Die Polymere sind mit anderen Systemen unverträglich und neigen begründet durch die hohe Säurezahl zur Trübung.

In WO 01/05841 werden epoxyfunktionelle Poly(meth)acrylate für Pulverlackanwendungen mittels kontinuierlicher Polymerisation hergestellt. Diese sind für wässrige Systeme jedoch ungeeignet. Auch dargestellt ist die Synthese von sehr kurzkettigen, 35 Gew% Acrylsäure enthaltenden Polyacrylaten. Diese sind jedoch weder zur Dispergierung von Pigmenten noch zur Compoundierung mit anderen Polymeren geeignet.

In WO 02/18456 wird ein Verfahren offenbart, in dem zwei Reaktorzonen, in der Regel Rohrreaktoren, kontinuierlich zur Synthese von säurehaltigen Polymethacrylaten verwendet werden, wobei in der zweiten Reaktorzone eine Monomerzusammensetzung zugegeben wird, die sich vor allem bezüglich der funktionellen Gruppen von der ersten Zusammensetzung unterscheidet. So erhält man immer Mischungen unterschiedlicher Polymerzusammensetzungen für Systeme, die kettenständige Acrylgruppen aufweisen und mittels Elektronenstrahl ausgehärtet werden. Das Verfahren kann in der Regel nur unter Zugabe von Lösungsmitteln oder für sehr geringe Molekulargewichte M_{w} deutlich kleiner 10T betrieben werden. Zudem haben die Polymere, die zur wässrigen Dispergierung hergestellt wurden, einen Acrylsäure- bzw. Maleinsäureanteil von mindestens 30 Gew%. Solche Systeme zeigen die bereits aufgezeigten Nachteile und sind zur Pigmentdispergierung in wässrigen Systemen ungeeignet.

Gemäß WO 00/02933 wird das gleiche technische Verfahren dazu angewendet, in einem zweistufigen Prozess eine radikalische Polymerisation mit einer Polykondensation zu kombinieren. Die über dieses aufwendige Verfahren erhältlichen Produkte stellen eine Mischung sehr unterschiedlicher Polymerspezies dar, die nur schlecht vollständig wässrig dispergierbar bzw. löslich ist. Zudem sind solche heterogenen Polymerarchitekturen wohl nur unzureichend zur vollständigen Dispergierung von Pigmenten geeignet.

In WO 00/02934 wiederum werden mittels kontinuierlicher Substanzpolymerisation, unter Zugabe von 10 bis 15 Gew% eines Lösungsmittels, säurehaltige Polyacrylate zur Herstellung von Pigmentpräparationen für wässrige Systeme, insbesondere für Druckfarben, hergestellt. Diese Polyacrylate zeichnen sich dadurch aus, dass sie zu mindestens 8,5 Gew% Acrylester von Alkoholen mit mindestens 11 Kohlenstoffatomen enthalten. Um mit diesem großen Anteil unpolarer Bausteine eine Dispergierbarkeit in wässrigen Systemen zu ermöglichen, müssen die Polymere im Gegenzug mindestens 18 Gew% Acrylsäure enthalten. Diese Zusammensetzung ist jedoch nur für eine kleine Anzahl von Pigmenten, wie sie beispielsweise in Druckfarben, nicht jedoch in Lacken zur Anwendungen kommen, geeignet.

### Aufgabe

Aufgabe der vorliegenden Erfindung war es, verbesserte Bindemittel auf Acrylat- bzw. Methacrylat- (im Weiteren kurz (Meth)acrylat-) Basis für wässrige Lackformulierungen zur Verfügung zu stellen.

Insbesondere war es Aufgabe ein (Meth)acrylatbindemittel für wässrige Lacksysteme zur Verfügung zu stellen, mit dem sich Pigmentpräparationen herstellen lassen, die einfach und unter guter Pigmentverteilung in etablierte Lacksysteme eingearbeitet werden können.

Darüber hinaus war es Aufgabe, dass diese Pigmentpräparationen zu wässrigen Lacken weiterverarbeitbar sind, die sehr gute Glanz-, Deck-, Verarbeitungs- und Farbeigenschaften haben.

Gleichzeitig war es Aufgabe der vorliegenden Erfindung, besagtes Bindemittel mittels eines kontinuierlichen Herstellungsverfahrens herzustellen. Dabei ist unter einem kontinuierlichen Herstellungsverfahren eine kontinuierlich, ohne Unterbrechung durchführbares Verfahren gemeint, das im Einzelnen aus den Verfahrensschritten Monomerdosierung, Polymerisation, Entgasung und Granulation besteht.

### Lösung

Gelöst wurden die Aufgaben durch Bereitstellung eines neuartigen Substanzpolymerisats. Dieses wird durch den modifizierten Einsatz eines kontinuierlichen Substanzpolymerisationsverfahrens, mit Hilfe dessen funktionelle (Meth)Acrylate mit hohem Umsatz lösungsmittelfrei polymerisiert werden können, hergestellt. Der Vorteil eines Substanzpolymerisationsverfahrens gegenüber der Suspensionspolymerisation ist die hohe Reinheit der Produkte, die ohne Zusatz von Hilfsstoffen wie Emulgatoren, Stabilisatoren, Entschäumern oder anderen Suspensionshilfsmitteln hergestellt werden können.

Um eine Pigmentpräparation gemäß den aktuellen bzw. zukünftigen Ansprüchen der Lackindustrie bezüglich dem VOC-Anteil (Anteil flüchtiger, organischer Bestandteile) mit dem erfindungsgemäßen Bindemittel herstellen zu können, muss das Bindemittel einen äußerst geringen Anteil volatiler Komponenten aufweisen. Dies wurde erfindungsgemäß dadurch gelöst, dass man das Bindemittel lösungs- und wasserfrei mittels einer kontinuierlichen Substanzpolymerisation zur Verfügung stellt. Durch Kombination mit einer thermischen Nachbehandelung ist es weiterhin eine Leistung der vorliegenden Erfindung, dass auch der Restmonomergehalt nur sehr gering und die thermische Stabilität der Bindemittel verbessert ist.

Überraschend wurde gefunden, dass sich mittels des erfindungsgemäßen Verfahrens auch Bindemittel auf (Meth)acrylatbasis herstellen lassen, die sowohl Säure- als auch Hydroxylgruppen aufweisen. Der Fachmann würde zur Herstellung solcher kritischen Bindemittel bevorzugt Polymerisationsmethoden verwenden, bei denen diese beiden Monomerspezies entweder stark verdünnt (Lösungspolymerisation) oder aufgrund unterschiedlicher Polaritäten getrennt (Suspensionspolymerisation) vorliegen.

Darüber hinaus wurden überraschend Zusammensetzungen gefunden, die sowohl wässrig-alkalisch löslich bzw. dispergierbar sind, als auch sehr gut zur Herstellung von Pigmentpräparationen geeignet sind. Darüber hinaus zeigen Lacke, diese Pigmentpräparationen enthalten sehr gute Glanz-, Deck-, Verarbeitungs- und Farbeigenschaften. Zudem sind die Pigmentpräparationen unter Verwendung der erfindungsgemäßen Bindemittel im Vergleich zum Stand der Technik einfacher herzustellen und zu verarbeiten. Insbesondere wurde dieses technische Problem dadurch gelöst, dass es gelungen ist, Bindemittel zur Verfügung zu stellen, die eine im Vergleich zum Stand der Technik geringen Säureanteil haben, ohne, dass die Löslichkeit bzw. Dispergierbarkeit im alkalisch-wässrigen dabei negativ beeinflusst wäre.

Eine besondere Leistung der vorliegenden Erfindung ist es, eine Kombination aus Bausteinen zur Verfügung zu stellen, die genau diese Anforderungen an das Bindemittel erfüllt. Dazu sind nur Kombinationen der folgenden Bausteine geeignet:
Methacrylate, die polymerisiert werden, sind ausgewählt aus der Gruppe der Alkylmethacrylate von geradkettigen, verzweigten oder cycloaliphatischen Alkoholen mit 1 bis 8 Kohlensoffatomen. Auch Mischungen aus diesen sind einsetzbar. Bevorzugte Beispiele sind Methylmethacrylat, Ethylmethacrylat, Propylmethacrylat, n-Butylmethacrylat, i-Butylmethacrylat, tert-Butylmethacrylat, Pentylmethacrylat, 2-Ethylhexylmethacrylat oder Cyclohexylmethacrylat. Besonders bevorzugt ist Methylmethacrylat (MMA).

Acrylate, die polymerisiert werden, sind ausgewählt aus der Gruppe der Alkylacrylate von geradkettigen, verzweigten oder cycloaliphatischen Alkoholen mit 1 bis 8 Kohlensoffatomen. Auch Mischungen aus diesen sind einsetzbar. Bevorzugte Beispiele sind Methylacrylat, Ethylacrylat, Propylacrylat, n-Butylacrylat, i-Butylacrylat, tert-Butylacrylat, Pentylacrylat, 2-Ethylhexylacrylat oder Cyclohexylacrylat. Besonders bevorzugt ist Ethylacrylat (EA).

Neben den zuvor dargelegten (Meth)Acrylaten können die zu polymerisierenden Zusammensetzungen auch weitere ungesättigte Monomere aufweisen, die mit den zuvor genannten (Meth)acrylaten copolymerisierbar sind. Hierzu gehören vor allem Styrol, α.Methylstyrol oder p-Methylstyrol, bevorzugt Styrol.

Ferner sind in den zu polymerisierenden Zusammensetzungen (Meth)acrylate oder Mischungen von (Meth)acrylaten enthalten, die eine Hydroxyfunktionalität aufweisen. Bevorzugte Beispiele sind Hydroxyethylacrylat, Hydroxyethylmethacrylat, Hydroxypropylacrylat und Hydroxypropylmethacrylat.

Schließlich ist in den zu polymerisierenden Mischungen Acrylsäure und/oder Methacrylsäure enthalten.

Eine weitere besondere Leistung der vorliegenden Erfindung ist es, Verhältnisse zwischen den einzelnen Bausteinen zur Verfügung zu stellen, die zur Lösung der technischen Aufgaben geeignet sind. Dabei wurde insbesondere überraschend gefunden, dass die erfindungsgemäßen Polymere zur Herstellung von wässrig-alkalisch löslichen bzw. dispergierbaren Pigmentpräparationen mit einem im Vergleich zum Stand der Technik nur geringen Säureanteil herstellbar sind.

Das erfindungsgemäße Bindemittel zur Herstellung von Pigmentpräparationen zeichnet sich insbesondere dadurch aus, dass es in wässrig-alkalischen Lösungen löslich bzw. dispergierbar ist und gute dispergierende Eigenschaften für eine Vielzahl verschiedenartiger Pigmente aufweist. Insbesondere wird diese Eigenschaft dadurch erreicht, dass das Bindemittel ausschließlich aus folgenden Monomeren hergestellt wird:
- 40 Gew% bis 70 Gew%, bevorzugt 45 Gew% bis 65 Gew% eines oder mehrerer Methacrylate, die einen Alkylrest aus 1 bis 8 Kohlenstoffatomen enthalten und/oder Styrol und/oder α-Methylstyrol. Bevorzugt handelt es sich um Methylmethacrylat, Styrol oder eine Mischung aus Methylmethacrylat und Styrol.
- 20 Gew% bis 40 Gew%, bevorzugt 25 Gew% bis 35 Gew% eines oder mehrerer Acrylate, die einen Alkylrest aus 1 bis 8 Kohlenstoffatomen enthalten. Bevorzugt handelt es sich bei diesem Acrylat um Ethylacrylat.
- 1 Gew% bis 15 Gew%, bevorzugt 4 Gew% bis 10 Gew% eines oder mehrerer (Meth)acrylate, die am Alkylrest eine Hydroxyfunktion aufweisen. Bevorzugt handelt es sich dabei um Hydroxypropyl(meth)acrylat oder Hydroxyethyl(meth)acrylat.
- 1 Gew% bis 17 Gew%, bevorzugt 7 Gew% bis 15 Gew% Acrylsäure und/oder Methacrylsäure. Bevorzugt handelt es sich dabei um Acrylsäure.

In einer ersten, weicheren Zusammensetzung, die insbesondere zur Herstellung von Fahrzeuglackierungen geeignet ist, ist folgende Zusammensetzung bevorzugt:
- 40 Gew% bis 60 Gew%, bevorzugt 45 Gew% bis 60 Gew% eines oder mehrerer Methacrylate, die einen Alkylrest aus 1 bis 8 Kohlenstoffatomen enthalten. Bevorzugt handelt es sich bei diesem Methacrylat um Methylmethacrylat.
- 20 Gew% bis 40 Gew%, bevorzugt 25 Gew% bis 35 Gew% eines oder mehrerer Acrylate, die einen Alkylrest aus 1 bis 8 Kohlenstoffatomen enthalten. Bevorzugt handelt es sich bei diesem Acrylat um Ethylacrylat.
- 0 Gew% bis 10 Gew%, bevorzugt bis 5 Gew% Styrol und/oder α-Methylstyrol. Bevorzugt handelt es sich dabei ausschließlich um Styrol.
- 1 Gew% bis 15 Gew%, bevorzugt 4 Gew% bis 10 Gew% eines oder mehrerer (Meth)acrylate, die am Alkylrest eine Hydroxyfunktion aufweisen. Bevorzugt handelt es sich dabei um Hydroxypropyl(meth)acrylat oder Hydroxyethyl(meth)acrylat.
- 1 Gew% bis 17 Gew%, bevorzugt 7 Gew% bis 15 Gew% Acrylsäure und/oder Methacrylsäure. Bevorzugt handelt es sich dabei um Acrylsäure.

In einer alternativen, härteren Zusammensetzung, die insbesondere für Gebäudeanstrichsfarben, so genannte Dekopaints geeignet ist, ist folgende Zusammensetzung bevorzugt:
- 0 Gew% bis 10 Gew% eines oder mehrerer Methacrylate, die einen Alkylrest aus 1 bis 8 Kohlenstoffatomen enthalten. Bevorzugt handelt es sich bei diesem Methacrylat um Methylmethacrylat.
- 20 Gew% bis 40 Gew% eines oder mehrerer Acrylate, die einen Alkylrest aus 1 bis 8 Kohlenstoffatomen enthalten. Bevorzugt handelt es sich bei diesem Acrylat um Ethylacrylat.
- 40 Gew% bis 60 Gew% Styrol.
- 1 Gew% bis 15 Gew%, bevorzugt 4 Gew% bis 10 Gew% eines oder mehrerer (Meth)acrylate, die am Alkylrest eine Hydroxyfunktion aufweisen. Bevorzugt handelt es sich dabei um Hydroxypropyl(meth)acrylat oder Hydroxyethyl(meth)acrylat.
- 1 Gew% bis 17 Gew%, bevorzugt 7 Gew% bis 15 Gew% Acrylsäure und/oder Methacrylsäure. Bevorzugt handelt es sich dabei um Acrylsäure.

Unabhängig von der Zusammensetzung weisen die Bindemittel ein massenmittleres Molekulargewicht M_{w} von mindestens 5T, bevorzugt von mindestens 10T und maximal von 80T, bevorzugt von 50T auf. Das Molekulargewicht wird angelehnt an DIN 55672-1 "Gelpermeationschromatographie, Teil 1: Tetrahydrofuran (THF) als Elutionsmittel" mittels Gelpermeationschromatographie (GPC) gegen einen PMMA-Standard gemessen.

Die erfindungsgemäßen Bindemittel werden mittels eines zur Herstellung solcher Systeme neuartiges Verfahren hergestellt. Dieses zeichnet sich dadurch aus, dass die die aufgeführten Monomermischungen neuartig in Bezug auf eine kontinuierliche Substanzpolymerisation in einem Kneter sind. Ferner wird das Polymerisationsverfahren frei von Lösungsmitteln und Hilfsstoffen durchgeführt. Weiterhin wird das Polymer direkt in Anschluss an die Polymerisation granuliert.

Ein Vorteil der Substanzpolymerisation gegenüber der Suspensionspolymerisation ist der Einsatz beliebiger Mengen an hydrophilen Comonomeren wie (Meth)Acrylsäuren, amino-oder hydroxyfunktionellen (Meth)Acrylaten.

Der Vorteil gegenüber der Lösungspolymerisation ist das Fehlen bzw. der nur sehr geringe Anteil von volatilen Bestandteilen im Polymerisationsprozess bzw. im Primärprodukt.

Der Vorteil des erfindungsgemäßen Verfahrens gegenüber einer Substanzpolymerisation in Batch-Fahrweise ist der deutlich höhere erzielbare Umsatz und damit der geringere Anteil an Restmonomeren im Endprodukt. Hinzu kommen eine höhere Produktionsgeschwindigkeit und eine breitere Variationsmöglichkeit der Prozessparameter.

Ein besonderer Vorteil des erfindungsgemäßen Verfahrens zur Herstellung von Bindemitteln für Lacke oder Beschichtungsmassen ist die Form, in der das Produkt am Ende des Herstellungsprozesses ohne eine weitere Verarbeitung vorliegt. Durch die Kombination eines kontinuierlich betriebenen Kneters zur Polymerisation, einer Entgasungsstufe wie zum Beispiel einem Flash-Entgaser oder einem Entgasungskneter zur Entfernung volatiler Bestandteile bzw. zur thermischen Nachbehandlung des Polymers und eines Granulators, werden Produkte erhalten, die erstens frei von Lösungsmitteln sind, zweitens ausschließlich aus Bestandteilen bestehen, die auf die eingesetzten Monomere, Kettenübertragungsreagenzien und Initiatoren zurückzuführen sind und die eine einstellbaren Granulatgröße aufweisen.

Das erfindungsgemäß hergestellte Bindemittel enthält ferner keine groben Bestandteile, d.h. Partikel, die größer sind als 5 mm. Größere Partikel können zu Verstopfungen z.B. von Düsen führen. Ein besonderer Nachteil eines solchen Grobgutes ist insbesondere die verringerte Löslichkeitsgeschwindigkeit in organischen Lösungsmitteln, Weichmachern oder Wasser. Diese ergibt sich leicht ersichtlich aus einem gegenüber kleineren Partikeln ungünstigeren Oberfläche-Masse-Verhältnis.

Das bevorzugte Verfahren zur Lösung der Aufgabe ist die kontinuierlich betriebene Knetertechnologie. Eine Beschreibung eines solchen rückgemischten Knetreaktors zur kontinuierlichen Massepolymerisation der Firma List findet sich in WO 2006/034875 bzw. in WO 2007/112901. Die Polymerisation wird oberhalb der Glasübergangstemperatur des Polymers durchgeführt. Monomere, Katalysatoren, Initiatoren etc. werden dabei kontinuierlich in den Reaktor geführt und mit bereits reagiertem Produkt rückgemischt. Gleichzeitig wird reagiertes Produkt kontinuierlich aus dem Mischkneter entfernt. Das unreagierte Monomer wird durch einen Restentgaser abgetrennt und kann dem Reaktor wieder zugeführt werden. Gleichzeitig wird in diesem Restentgaser die thermische Nachbehandlung des Polymers durchgeführt. Nach abgeschlossener Polymerisation kann das Produkt thermisch nachbehandelt werden. Bei einer Temperatur oberhalb von 90 °C, bevorzugt oberhalb von 110 °C, können im Produkt enthaltene volatile Bestandteile wie Restmonomere oder optional verwendetes Lösungsmittel entfernt werden. Die so wieder gewonnenen Monomere können optional in den Polymerisationsprozess zurückgeführt werden. Ein solches Vorgehen ist in die Knetertechnologie problemlos durch einen angeschlossenen Verfahrensschritt wie eine Flash-Entgasung, einen Entgasungskneter oder einen Entgasungsextruder implementierbar.

Als Polymerisationsinitiatoren, die in der Regel der Monomerphase zugesetzt werden, dienen die üblicherweise verwendeten radikalischen Initiatoren, insbesondere Peroxide und Azoverbindungen. Unter Umständen kann es vorteilhaft sein, ein Gemisch verschiedener Initiatoren einzusetzen. Die Einsatzmenge liegt im Allgemeinen im Bereich zwischen 0,1 und 5 Gewichtsprozent, bezogen auf die Monomerphase. Vorzugsweise finden Azoverbindungen wie Azobisisobuttersäurenitril, Azobis-(2,4-dimethyl)-valeronitril, 1,1'-Azobis(cyclohexancarbonitril) (WAKO^{®} V40), 2-(Carbamoylazo)-isobutyronitril (WAKO^{®} V30) oder Peroxide wie tert.-Butylperoctoat, tert-Butylperbenzoat, Octanoylperoxid, Decanoylperoxid, Lauroylperoxid, Benzoylperoxid, Monochlorbenzoylperoxid, Dichlorbenzoylperoxid, p-Ethylbenzoylperoxid Di(tert-butyl)peroxid (DTBP), Di(tert-amyl)peroxid (DTAP), tert-Butylperoxy-(2-ethylhexyl)carbonat (TBPEHC) und weitere bei hoher Temperatur zerfallende Peroxide als Radikalinitiator Verwendung. Mit bei hoher Temperatur zerfallende Radikalinitiatoren sind Verbindungen zu verstehen mit einer Halbwertszeit von einer Stunde in einem Temperaturbereich von 85 bis 150 °C.

Zur Einstellung des Molekulargewichts des gebildeten Polymerisats können der Monomerphase auch in üblicher Weise bis zu 8 Gew.-% eines oder mehrerer an sich bekannter Kettenregler zugesetzt werden. Beispielsweise seien genannt: Mercaptane, wie n-Butylmercaptan, n-Octylmercaptan, n-Dodecylmercaptan tert-Dodecylmercaptan oder Mercaptoethanol; Thioglykolsäure oder Thioglykolsäureester wie Thioglykolsäureisooctylester oder Thioglykolsäurelaurylester; aliphatische Chlorverbindungen; Enolether oder dimeres α-Methylstyrol.

Falls verzweigte Polymerisate hergestellt werden sollen, kann die Monomerphase auch bis zu etwa einem Gewichtsprozent mehrfunktionelle Monomere enthalten, beispielsweise Ethylenglykoldi(meth)acrylat, Butandioldi(meth)acrylat oder Divinylbenzol.

Das erfindungsgemäße Substanzpolymerisat, bevorzugt in Form eines Granulats, wird bevorzugt mit Pigmenten und optional weiteren Additiven zu einer Pigmentpräparation compoundiert. Die Compoundierung erfolgt bevorzugt mittels Extrusion. Als Produkt wird so ein einen hohen Anteil Pigmente enthaltendes Granulat hergestellt, das in eine Beschichtungszusammensetzung mit Bindemitteln und weiteren Lackbestandteilen eingearbeitet werden kann. Dazu wird das Granulat zusammen mit diesen anderen Bestandteilen in einem alkalisch-wässrigen Medium gelöst. Diese Lösung ist als wässriger Lack verwendbar. Das Granulat kann zwischen 20 Gew% und 80 Gew% Pigmente enthalten. Bei diesen Pigmenten kann es sich, ohne damit eine Einschränkung vorzunehmen, beispielsweise um Russ, organische oder mineralische Pigmente handeln.

Auch wenn diese Pigmentpräparationen primär zur Verwendung in wässrigen Lackformulierungen entwickelt wurden, können die Granulate auch in Lösungsmittel basierten Lacksystemen, High Solids oder in 100%-Systemen eingesetzt werden.

Es ergibt sich ein breites Anwendungsfeld für die derart hergestellten Lackformulierungen. Bevorzugt werden diese in Beschichtungen z.B. von Metall-, Plastik-, Keramik- oder Holzoberflächen eingesetzt. Beispiele sind besonders die Verwendung der Pigmentpräparationen in Bautenfarben, Schiffs- oder Containerfarben und insbesondere in Automobillacken.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Partikelgrößen

Die Partikelgrößen und die Partikelgrößenverteilungen, die im Folgenden als d₅₀-Wert angegeben sind, wurden mit einem Coulter LS 13 320 gemäß ISO 13320-1 in einem Messbereich zwischen 0,04 µm und 2000 µm bestimmt. Als mittlere Partikelgröße d₅₀ wird der Median des Partikeldurchmessers bezeichnet, basierend auf dem Partikelvolumen; d.h. 50 % des Gesamtpartikelvolumens sind kleiner und 50 % größer als die mittlere Partikelgröße.

Partikelgrößen größer 2000 µm wurden zusätzlich mit einem Camsizer der Fa. Retsch Technology gemäß ISO/FDISm13322-2.2:2006(E) bestimmt.

### Messung der Glasübergangstemperaturen

Die Messung der Glasübergangstemperaturen Tg erfolgt mittels Dynamische Differenz-Thermoanalyse (DSC) gemäß ISO 11357-2.

### Messung der Lösezeiten

Die Messung der Lösezeiten der unveränderten Produkte der Beispiel- bzw. Vergleichsbeispielsynthesen erfolgte an einer 25 gew.% igen wässrigen Lösung. Dafür wurde als Rühraggregat ein Magnetrührstäbchen mit einer Länge von 4 cm und ein Magnetrührer (Heiz- Rührplatte) der Firma IKA Labortechnik® Typ RCT verwendet. In einem 250 ml Weithalsglas wurden 70,6 g Lösungsmittel (Wasser), 2,2 g Ammoniaklösung (25 % in Wasser) und 2,2 g DMEA-Lösung (Dimethylethylamin 25 % in Wasser) vorgelegt. Die Polymerprobe (25 g) wurd unter Rühren (Stufe 9) zugegeben. Der Deckel wird sofort geschlossen. Sobald bei einer optischen Begutachtung keine Fest- bzw. Schwebstoffe mehr feststellbar sind, wird der Magnetrührer ausgeschaltet, die Zeit notiert und die Probe optisch bewertet.

### Viskosität

Die Viskosität η der Bindemittellösungen, die bei den Versuchen zur Ermittlung der Lösezeit hergestellt wurden, wurde mittels Kegel-Platte-Geometrie mit einem Haake RS1 der Firma Thermo Elektron nach DIN 53018 gemessen. Als Drehkörper dient der C35/2 Ti-Kegel mit einem Durchmesser von 35,002 mm. Die Messungen erfolgten in Abhängigkeit der Schergeschwindigkeit D.

### Testmethode zur Bestimmung der Lackeigenschaften

Die Bindemittellösung (6 % reines Harz) wurde mittels eines Dissolver für 2 Minuten bei 1500 U/min in das jeweilige Lacksystem eingearbeitet. Die Einarbeitungszeit des Härters bei den 2K-PUR-Systemen war 2 Minuten bei 2000 U/min. Der nun komplette Lack wurde mit einem 100 µm (NFD)-Kastenrakel auf einer Glasplatte appliziert. Nach vollständiger Trocknung wurde visuell die Verträglichkeit des Bindemittels beurteilt. Maß der Verträglichkeit ist die Transparenz und die Oberflächenbeschaffenheit (glatt, Kraterbildung etc.) des Filmes.

### Beispiel B1, Zusammensetzung 1 (kontinuierliche Substanzpolymerisation)

Eine Mischung bestehend aus 51,5 Gew% Methylmethacrylat, 31 Gew% Ethylacrylat, 9 Gew% Acrylsäure, 6,5 Gew% Hydroxypropylmethacrylat, 2 Gew% Cyclohexylmethacrylat, 0,9 Gew% einer 50 gew%igen Lösung von tert-Butylperacetat in Aliphaten (TRIGONOX F-C50 der Fa. AKZO) und 2,8 Gew% Isooctylthioglycolat (TGIO) wird kontinuierlich einem rückgemischten Knetreaktor der Firma List, wie zum Beispiel beschrieben in WO 2006/034875, zugeführt und gleichzeitig reagiertes Polymer kontinuierlich aus dem Reaktor herausgeführt. Die Innentemperatur im Reaktor beträgt 110 °C, wobei die Temperatur um bis zu 10 °C schwanken kann. Die mittlere Verweilzeit liegt bei ca. 40 Minuten. Das Produkt wurde in einem geeigneten Gefäß aufgefangen und anschließend vermahlen.

### Beispiel B2, Zusammensetzung 2 (kontinuierliche Substanzpolymerisation)

Eine Mischung bestehend aus 52,1 Gew% Styrol, 30 Gew% Ethylacrylat, 13 Gew% Acrylsäure, 4,9 Gew% Hydroxyethylmethacrylat, 1,35 Gew% einer 50 gew%igen Lösung von tert-Butylperacetat in Aliphaten (TRIGONOX F-C50 der Fa. AKZO) und 3,3 Gew% Isooctylthioglycolat (TGIO) wird kontinuierlich einem rückgemischten Knetreaktor der Firma List, wie zum Beispiel beschrieben in WO 2006/034875, zugeführt und gleichzeitig reagiertes Polymer kontinuierlich aus dem Reaktor herausgeführt. Die Innentemperatur im Reaktor beträgt 130 °C. Die mittlere Verweilzeit liegt bei ca. 20 Minuten. Die Polymerschmelze wird unmittelbar nach dem Reaktor über ein Schmelzerohr bei 140 °C in einen Entgasungskneter der Firma List überführt, in dem bei einer Temperatur von 120 °C restliche unreagierte Monomere aus dem Polymer entfernt werden. Das Produkt wurde in einem geeigneten Gefäß aufgefangen und anschließend vermahlen.

### Beispiel B3, Zusammensetzung 3 (kontinuierliche Substanzpolymerisation)

Eine Mischung bestehend aus 54 Gew% Methylmethacrylat, 31 Gew% Ethylacrylat, 9 Gew% Acrylsäure, 6 Gew% Hydroxypropylmethacrylat, 0,45 Gew% tert-Butylper-2-ethylhexanoat (TBPEH), 0,45 Gew% Di-tert-Amylperoxid (DTAP) und 2,6 Gew% Isooctylthioglycolat (TGIO) wird kontinuierlich einem rückgemischten Knetreaktor der Firma List, wie zum Beispiel beschrieben in WO 2006/034875, zugeführt und gleichzeitig reagiertes Polymer kontinuierlich aus dem Reaktor herausgeführt. Die Innentemperatur im Reaktor beträgt 120 °C, wobei die Temperatur um bis zu 15 °C schwanken kann. Die mittlere Verweilzeit liegt bei ca. 30 Minuten. Die Polymerschmelze wird unmittelbar nach dem Reaktor über ein Schmelzerohr bei 130 °C in einen Entgasungskneter der Firma List überführt, in dem bei einer Temperatur von 130 °C restliche unreagierte Monomere aus dem Polymer entfernt werden. Nach der Entgasung wird die Polymerschmelze direkt weiter in einen Unterwassergranulator Compact 120 der Fa. BKG GmbH, ausgestattet mit einer 1,5 mm Lochplatte, geleitet. Das Granulat wird anschließend in einem Trockner Master 300 getrocknet, in einem geeigneten Gefäß aufgefangen und die Partikelgröße - wie oben beschrieben - bestimmt.

### Beispiel B4, Zusammensetzung 4 (kontinuierliche Substanzpolymerisation)

Eine Mischung bestehend aus 49,5 Gew% MMA, 26 Gew% Ethylacrylat, 18 Gew% Acrylsäure, 6,5 Gew% Hydroxypropylmethacrylat, 0,9 Gew% einer 50 gew%igen Lösung von tert-Butylperacetat in Aliphaten (TRIGONOX F-C50 der Fa. AKZO) und 3,0 Gew% Isooctylthioglycolat (TGIO) wird kontinuierlich einem rückgemischten Knetreaktor der Firma List, wie zum Beispiel beschrieben in WO 2006/034875, zugeführt und gleichzeitig reagiertes Polymer kontinuierlich aus dem Reaktor herausgeführt. Die Innentemperatur im Reaktor beträgt 110 °C. Die mittlere Verweilzeit liegt bei ca. 20 Minuten. Das Produkt wurde in einem geeigneten Gefäß aufgefangen und anschließend vermahlen.

### Beispiel B5, Zusammensetzung 5 (kontinuierliche Substanzpolymerisation)

Eine Mischung bestehend aus 48 Gew% MMA, 30,5 Gew% Ethylacrylat, 13 Gew% Acrylsäure, 2 Gew% Styrol, 6,5 Gew% Hydroxypropylmethacrylat, 0,9 Gew% einer 50 gew%igen Lösung von tert-Butylperacetat in Aliphaten (TRIGONOX F-C50 der Fa. AKZO) und 2,8 Gew% Isooctylthioglycolat (TGIO) wird kontinuierlich einem rückgemischten Knetreaktor der Firma List, wie zum Beispiel beschrieben in WO 2006/034875, zugeführt und gleichzeitig reagiertes Polymer kontinuierlich aus dem Reaktor herausgeführt. Die Innentemperatur im Reaktor beträgt 110 °C. Die mittlere Verweilzeit liegt bei ca. 20 Minuten. Die Polymerschmelze wird unmittelbar nach dem Reaktor über ein Schmelzerohr bei 130 °C in einen Entgasungskneter der Firma List überführt, in dem bei einer Temperatur von 120 °C restliche unreagierte Monomere aus dem Polymer entfernt werden. Das Produkt wurde in einem geeigneten Gefäß aufgefangen und anschließend vermahlen.

### Referenzbeispiel R1, Zusammensetzung 3 (Suspensionspolymerisation)

In einen 1 to VA-Stahlreaktor, ausgestattet mit Inter-MIG-Rührer und Rückflußkühler werden 460 kg VE-Wasser vorgelegt, der Rührer auf eine Drehzahl von 70 Umdrehungen pro Minute eingestellt und auf eine Außentemperatur von 40°C aufgeheizt. Es werden 750 g Polyacrylsäure zugegeben und durch Rühren gelöst. In einem Vorlagecontainer werden 265 kg (53 Gew%) Methylmethacrylat, 155 kg (31 Gew%) Ethylacrylat, 50 kg (10 Gew%) Acrylsäure, 30 kg (6 Gew%) Hydroxypropylmethacrylat, 5 kg tert-Butylperpivalat (25 gew%ig in Aliphaten; TRIGONOX 25-C75) und 14 kg Isooctylthioglycolat (TGIO) gemischt und unter Rühren homogenisiert. Die Monomerstammlösung wird durch einen verminderten Reaktorinnendruck von ca. 800 mbar über einen Zeitraum von 15 min eingesaugt und der Vorlagecontainer mit 20 kg VE-Wasser nachgespühlt. Der Kessel wird über einen Zeitraum von 20 min bei einem Druck von ca. 800 mbar evakuiert und anschließend mit Stickstoff geflutet. Die Innentemperatur wird auf 45 °C geregelt und über 4 h sukzessive auf 65 °C erhöht. Die Polymerisation ist beendet, wenn die Wärmeentwicklung abbricht. Der Ansatz wird abgekühlt. Durch eine Filter-Nutsche (1 mm Porengröße) wird die Mutterlauge von den Polymerperlen abgetrennt und bei 30 °C getrocknet. Die Partikelgröße wird wie oben beschrieben bestimmt.

| | Beispiel B1 | Beispiel B2 | Beispiel B3 | Beispiel B4 | Beispiel B5 | Referenz R1 |
|---|---|---|---|---|---|---|
| Molmasse M_{w} / g/mol | 21100 | 17900 | 21500 | 22100 | 25200 | 19.500 |
| Restmonomergehalt Ethylacrylat / % | 0,38 | 0, 09 | 0,04 | 0,21 | 0,07 | 0,43 |
| Restmonomergehalt Methylmethacrylat / % | 0,23 | - | 0, 05 | 0,08 | 0,05 | < 0,005 |

| | Referenz R1 | Beispiel B3 | Beispiel B1 |
|---|---|---|---|
| Molmasse M_{w} / g/mol | 19.500 | 21500 | 21100 |
| Partikelgröße d₅₀ / µm | 630 | 2300 | n. b.* |
| Glastemperatur T_{g} / °C | 43 | 41 | 42 |
| Lösezeit / min | 30 | 25 | 25 |
| Aussehen der Lösung | trüb | transparent | transparent |
| Viskosität η (D = 100 s⁻¹) / mPas | 7620 | 134 | 334 |
| Viskosität η (D = 500 s⁻¹) / mPas | 1560 | 133 | 302 |
| Viskosität η (D = 1000 s⁻¹) / mPas | 825 | 128 | 289 |
| Verträglichkeit | schlecht | gut | mittel |

| | | | |
|---|---|---|---|
| * n.b. = nicht bestimmt | | | |

## Patentansprüche

1. Granulat zur Verwendung als Bindemittel zur Herstellung von Pigmentpräparationen, **dadurch gekennzeichnet, dass** das Bindemittel in wässrig-alkalischen Lösungen löslich ist,
dass das Bindemittel ausschließlich aus folgenden Monomeren hergestellt wurde:
- 40 Gew% bis 70 Gew% eines oder mehrerer Methacrylate, **dadurch gekennzeichnet, dass** der Alkylrest aus 1 bis 8 Kohlenstoffatomen und/oder Styrol und/oder α-Methylstyrol besteht,
- 20 Gew% bis 40 Gew% eines oder mehrerer Acrylate, **dadurch gekennzeichnet, dass** der Alkylrest aus 1 bis 8 Kohlenstoffatomen besteht,
- 1 Gew% bis 15 Gew% eines oder mehrerer (Meth)acrylate, **dadurch gekennzeichnet, dass** der Alkylrest eine Hydroxyfunktion aufweist, und
- 1 Gew% bis 17 Gew% Acrylsäure und/oder Methacrylsäure,
und dass das Bindemittel über eine kontinuierliche Substanzpolymerisation hergestellt wurde.

2. Granulat zur Herstellung von Pigmentpräparationen gemäß Anspruch 1, **dadurch gekennzeichnet, dass** das Bindemittel in wässrig-alkalischen Lösungen löslich ist,
dass das Bindemittel ausschließlich aus folgenden Monomeren hergestellt wurde:
- 40 Gew% bis 60 Gew% eines oder mehrerer Methacrylate, **dadurch gekennzeichnet, dass** der Alkylrest aus 1 bis 8 Kohlenstoffatomen besteht,
- 20 Gew% bis 40 Gew% eines oder mehrerer Acrylate, **dadurch gekennzeichnet, dass** der Alkylrest aus 1 bis 8 Kohlenstoffatomen besteht,
- 0 Gew% bis 10 Gew% Styrol und/oder α-Methylstyrol,
- 1 Gew% bis 15 Gew% eines oder mehrerer (Meth)acrylate, **dadurch gekennzeichnet, dass** der Alkylrest eine Hydroxyfunktion aufweist, und
- 1 Gew% bis 17 Gew% Acrylsäure und/oder Methacrylsäure,
und dass das Bindemittel über eine kontinuierliche Substanzpolymerisation hergestellt wurde.

3. Granulat zur Herstellung von Pigmentpräparationen gemäß Anspruch 2, **dadurch gekennzeichnet, dass** das Bindemittel ausschließlich aus folgenden Monomeren hergestellt wurde:
- 45 Gew% bis 60 Gew% eines oder mehrerer Methacrylate, **dadurch gekennzeichnet, dass** der Alkylrest aus 1 bis 8 Kohlenstoffatomen besteht,
- 25 Gew% bis 35 Gew% eines oder mehrerer Acrylate, **dadurch gekennzeichnet, dass** der Alkylrest aus 1 bis 8 Kohlenstoffatomen besteht,
- 0 Gew% bis 5 Gew% Styrol und/oder α-Methylstyrol,
- 4 Gew% bis 10 Gew% eines oder mehrerer (Meth)acrylate, **dadurch gekennzeichnet, dass** der Alkylrest eine Hydroxyfunktion aufweist, und
- 7 Gew% bis 15 Gew% Acrylsäure und/oder Methacrylsäure.

4. Granulat zur Herstellung von Pigmentpräparationen gemäß Anspruch 1, **dadurch gekennzeichnet, dass** das Bindemittel in wässrig-alkalischen Lösungen löslich ist,
dass das Bindemittel ausschließlich aus folgenden Monomeren hergestellt wurde:
- 0 Gew% bis 10 Gew% eines oder mehrerer Methacrylate, **dadurch gekennzeichnet, dass** der Alkylrest aus 1 bis 8 Kohlenstoffatomen besteht,
- 20 Gew% bis 40 Gew% eines oder mehrerer Acrylate, **dadurch gekennzeichnet, dass** der Alkylrest aus 1 bis 8 Kohlenstoffatomen besteht,
- 40 Gew% bis 60 Gew% Styrol,
- 1 Gew% bis 15 Gew% eines oder mehrerer (Meth)acrylate, **dadurch gekennzeichnet, dass** der Alkylrest eine Hydroxyfunktion aufweist, und
- 1 Gew% bis 17 Gew% Acrylsäure und/oder Methacrylsäure,
und dass das Bindemittel über eine kontinuierliche Substanzpolymerisation hergestellt wurde.

5. Granulat zur Herstellung von Pigmentpräparationen gemäß einem der Ansprüche 1 bis 4, **dadurch gekennzeichnet, dass** es sich im einzelnen
- bei dem Methacrylat mit einem Alkylrest aus 1 bis 8 Kohlenstoffatomen um Methylmethacrylat,
- bei dem Acrylat mit einem Alkylrest aus 1 bis 8 Kohlenstoffatomen um Ethylacrylat,
- um Styrol,
- bei dem (Meth)acrylat mit dem eine Hydroxyfunktion aufweisenden Alkylrest um Hydroxypropyl(meth)acrylat oder Hydroxyethyl(meth)acrylat und
- um Acrylsäure handelt.

6. Granulat zur Herstellung von Pigmentpräparationen gemäß einem der Ansprüche 1 bis 5, **dadurch gekennzeichnet, dass** das Bindemittel ein Molekulargewicht M_{w} von mindestens 10T und maximal von 50T aufweist.

7. Verfahren zur Herstellung von Granulaten gemäß einem oder mehreren der Ansprüche 1 bis 6, **dadurch gekennzeichnet, dass** die Polymerisation kontinuierlich in einem Kneter durchgeführt wird, dass die Monomermischung frei von Lösungsmitteln ist, und dass das Polymer direkt in Anschluss an die Polymerisation granuliert wird.

8. Verwendung eines gemäß Anspruch 7 hergestellten Granulats, **dadurch gekennzeichnet, dass** mittels Extrusion aus dem Granulat, Pigmenten und optionalen Additiven eine Pigmentpräparation hergestellt wird.

9. Verwendung eines Granulats gemäß Anspruch 8, **dadurch gekennzeichnet, dass** die Pigmentpräparation mit einem Bindemittel und weiteren Lackbestandteilen in einem alkalisch-wässrigen Medium gelöst oder dispergiert wird.

10. Verwendung der Lösung oder Dispersion nach Anspruch 9 als wässriger Lack.

## Claims

1. Pellets for use as binder for producing pigment preparations, **characterized in that** the binder is soluble in aqueous-alkaline solutions,
**in that** the binder has been prepared exclusively from the following monomers:
- 40% to 70 % by weight of one or more methacrylates **characterized in that** the alkyl radical is composed of 1 to 8 carbon atoms and/or styrene and/or α-methylstyrene,
- 20% to 40% by weight of one or more acrylates **characterized in that** the alkyl radical is composed of 1 to 8 carbon atoms,
- 1% to 15% by weight of one or more (meth)acrylates **characterized in that** the alkyl radical contains a hydroxyl function, and
- 1% to 17% by weight of acrylic acid and/or methacrylic acid,
and **in that** the binder has been prepared via a continuous bulk polymerization.

2. Pellets for producing pigment preparations according to Claim 1, **characterized in that** the binder is soluble in aqueous-alkaline solutions,
**in that** the binder has been prepared exclusively from the following monomers:
- 40% to 60% by weight of one or more methacrylates **characterized in that** the alkyl radical is composed of 1 to 8 carbon atoms,
- 20% to 40% by weight of one or more acrylates **characterized in that** the alkyl radical is composed of 1 to 8 carbon atoms,
- 0% to 10% by weight of styrene and/or α-methylstyrene,
- 1% to 15% by weight of one or more (meth)acrylates **characterized in that** the alkyl radical contains a hydroxyl function, and
- 1% to 17% by weight of acrylic acid and/or methacrylic acid,
and **in that** the binder has been prepared via a continuous bulk polymerization.

3. Pellets for producing pigment preparations according to Claim 2, **characterized in that** the binder has been prepared exclusively from the following monomers:
- 45% to 60% by weight of one or more methacrylates **characterized in that** the alkyl radical is composed of 1 to 8 carbon atoms,
- 25% to 35% by weight of one or more acrylates **characterized in that** the alkyl radical is composed of 1 to 8 carbon atoms,
- 0% to 5% by weight of styrene and/or α-methylstyrene,
- 4% to 10% by weight of one or more (meth)acrylates **characterized in that** the alkyl radical contains a hydroxyl function, and
- 7% to 15% by weight of acrylic acid and/or methacrylic acid.

4. Pellets for producing pigment preparations according to Claim 1, **characterized in that** the binder is soluble in aqueous-alkaline solutions,
**in that** the binder has been prepared exclusively from the following monomers:
- 0% to 10% by weight of one or more methacrylates **characterized in that** the alkyl radical is composed of 1 to 8 carbon atoms,
- 20% to 40% by weight of one or more acrylates **characterized in that** the alkyl radical is composed of 1 to 8 carbon atoms,
- 40% to 60% by weight of styrene,
- 1% to 15% by weight of one or more (meth)acrylates **characterized in that** the alkyl radical contains a hydroxyl function, and
- 1% to 17% by weight of acrylic acid and/or methacrylic acid,
and **in that** the binder has been prepared via a continuous bulk polymerization.

5. Pellets for producing pigment preparations according to any of Claims 1 to 4, **characterized in that** the monomers used are specifically
- for the methacrylate having an alkyl radical of 1 to 8 carbon atoms, methyl methacrylate,
- for the acrylate having an alkyl radical of 1 to 8 carbon atoms, ethyl acrylate,
- styrene,
- for the (meth)acrylate having the alkyl radical containing a hydroxyl function, hydroxypropyl (meth)acrylate or hydroxyethyl (meth)acrylate, and
- acrylic acid.

6. Pellets for producing pigment preparations according to any of Claims 1 to 5, **characterized in that** the binder has a molecular weight M_{w} of at least 10T and at most of 50T.

7. Process for preparing pellets according to one or more of Claims 1 to 6, **characterized in that** the polymerization is carried out continuously in a kneading apparatus, **in that** the monomer mixture is free from solvents, and **in that** the polymer is pelletized directly subsequent to the polymerization.

8. Use of pellets prepared according to Claim 7, **characterized in that** a pigment preparation is produced by extrusion from the pellets, pigments and optional additives.

9. Use of pellets according to Claim 8, **characterized in that** the pigment preparation is dissolved or dispersed with a binder and further coating constituents in an alkaline-aqueous medium.

10. Use of the solution or dispersion according to Claim 9 as an aqueous coating material.

## Revendications

1. Granulat destiné à être utilisé comme liant pour la production de préparations pigmentaires, **caractérisé en ce que** le liant est soluble dans des solutions aqueuses-alcalines, **en ce que** le liant est préparé exclusivement à partir des monomères suivants :
- 40% en poids à 70% en poids d'un ou de plusieurs méthacrylates, **caractérisés**
**en ce que** le radical alkyle est constitué par 1 à 8 atomes de carbone et/ou du styrène et/ou de l'α-méthylstyrène
- 20% en poids à 40% en poids d'un ou de plusieurs acrylates, **caractérisés**
**en ce que** le radical alkyle est constitué par 1 à 8 atomes de carbone,
- 1% en poids à 15% en poids d'un ou de plusieurs (méth)acrylates, **caractérisés**
**en ce que** le radical alkyle présente une fonction hydroxy, et
- 1% en poids à 17% en poids d'acide acrylique et/ou d'acide méthacrylique,
et **en ce que** le liant a été préparé par une polymérisation continue en masse.

2. Granulat pour la production de préparations pigmentaires selon la revendication 1, **caractérisé en ce que** le liant est soluble dans des solutions aqueuses-alcalines, **en ce que** le liant est préparé exclusivement à partir des monomères suivants :
- 40% en poids à 60% en poids d'un ou de plusieurs méthacrylates, **caractérisés**
**en ce que** le radical alkyle est constitué par 1 à 8 atomes de carbone,
- 20% en poids à 40% en poids d'un ou de plusieurs acrylates, **caractérisés**
**en ce que** le radical alkyle est constitué par 1 à 8 atomes de carbone,
- 0% en poids à 10% en poids de styrène et/ou d'α-méthylstyrène,
- 1% en poids à 15% en poids d'un ou de plusieurs (méth)acrylates, **caractérisés**
**en ce que** le radical alkyle présente une fonction hydroxy, et
- 1% en poids à 17% en poids d'acide acrylique et/ou d'acide méthacrylique,
et **en ce que** le liant a été préparé par une polymérisation continue en masse.

3. Granulat pour la production de préparations pigmentaires selon la revendication 2, **caractérisé en ce que** le liant est préparé exclusivement à partir des monomères suivants :
- 45% en poids à 60% en poids d'un ou de plusieurs méthacrylates, **caractérisés**
**en ce que** le radical alkyle est constitué par 1 à 8 atomes de carbone,
- 25% en poids à 35% en poids d'un ou de plusieurs acrylates, **caractérisés**
**en ce que** le radical alkyle est constitué par 1 à 8 atomes de carbone,
- 0% en poids à 5% en poids de styrène et/ou d'α-méthylstyrène,
- 4% en poids à 10% en poids d'un ou de plusieurs (méth)acrylates, **caractérisés**
**en ce que** le radical alkyle présente une fonction hydroxy, et
- 7% en poids à 15% en poids d'acide acrylique et/ou d'acide méthacrylique.

4. Granulat pour la production de préparations pigmentaires selon la revendication 1, **caractérisé en ce que** le liant est soluble dans des solutions aqueuses-alcalines, **en ce que** le liant est préparé exclusivement à partir des monomères suivants :
- 0% en poids à 10% en poids d'un ou de plusieurs méthacrylates, **caractérisés**
**en ce que** le radical alkyle est constitué par 1 à 8 atomes de carbone,
- 20% en poids à 40% en poids d'un ou de plusieurs acrylates, **caractérisés**
**en ce que** le radical alkyle est constitué par 1 à 8 atomes de carbone,
- 40% en poids à 60% en poids de styrène,
- 1% en poids à 15% en poids d'un ou de plusieurs (méth)acrylates, **caractérisés**
**en ce que** le radical alkyle présente une fonction hydroxy, et
- 1% en poids à 17% en poids d'acide acrylique et/ou d'acide méthacrylique,
et **en ce que** le liant a été préparé par une polymérisation continue en masse.

5. Granulat pour la production de préparations pigmentaires selon au moins l'une quelconque des revendications 1 à 4, **caractérisé en ce qu'**il s'agit en particulier
- pour le méthacrylate présentant un radical alkyle comprenant 1 à 8 atomes de carbone, de méthacrylate de méthyle,
- pour l'acrylate présentant un radical alkyle comprenant 1 à 8 atomes de carbone, d'acrylate d'éthyle,
- de styrène,
- pour le (méth)acrylate présentant un radical alkyle présentant une fonction hydroxy, de (méth)acrylate d'hydroxypropyle ou de méthacrylate d'hydroxyéthyle et
- d'acide acrylique.

6. Granulat pour la production de préparations pigmentaires selon au moins l'une quelconque des revendications 1 à 5, **caractérisé en ce que** le liant présente un poids moléculaire M_{w} d'au moins 10 000 et d'au plus 50 000.

7. Procédé pour la préparation de granulats selon l'une ou plusieurs des revendications 1 à 6, **caractérisé en ce que** la polymérisation est réalisée en continu dans un malaxeur, **en ce que** le mélange de monomères est exempt de solvant et **en ce que** le polymère est granulé de manière directement consécutive à la polymérisation.

8. Utilisation d'un granulat produit selon la revendication 7, **caractérisée en ce qu'**on produit une préparation pigmentaire par extrusion à partir du granulat, de pigments et d'additifs éventuels.

9. Utilisation d'un granulat selon la revendication 8, **caractérisée en ce que** la préparation pigmentaire est dissoute ou dispersée avec un liant et d'autres constituants de laque dans un milieu alcalin-aqueux.

10. Utilisation de la solution ou de la dispersion selon la revendication 9 comme laque aqueuse.
